# EUROPEAN PATENT APPLICATION

(11) **EP 3 582 034 A1**
(43) Date of publication of application: **18.12.2019**
(21) Application number: 18178031.3
(22) Date of filing: 15.06.2018
(51) Int. Cl.: G05B 19/042

(54) **METHOD AND APPARATUS, IN THE FIELD OF AUTOMATION TECHNOLOGY, OF UPDATING PROCESSING DATA**

(71) Applicant: Siemens Aktiengesellschaft, 80333 München (DE)
(72) Inventor: Bender, Philipp, 76761 Rülzheim (DE); Osigus, Heiko, 76870 Kandel (DE); Selle, Sven, 90489 Nürnberg (DE)

(57) **Abstract**

A method, in the field of automation technology, of updating processing data of an automation data processing component (C2), comprising and/or initiating: Selecting (S1), by an automation data extraction component (C1), automation data of one or more automation instruments (ED, PA), Creating (S2), by the automation data extraction component (C1) based on automation data selected, processing data for processing by the automation data processing component (C2), Updating (S5), by the automation data extraction component (C1) based on an update mechanism determined, at least parts of the processing data.

## Description

The present invention relates to the field of automation technology and in particular to a method and an apparatus of updating processing data. Further embodiments comprise a computer program, a computer program product and a data stream.

Automation instruments produce large amounts of automation data. Such automation data may originate from one or more devices, e.g. sensors, actuators or other process equipment governing operation, for example of an industrial process plant. The automation data may be raw data or pre-processed data. To this end, for example one or more signals are sampled whereby the automation data is generated. The automation data may further be subject to subsequent processing, e.g., in order to determine a mean value or deviation of the data from a pre-determined threshold. Furthermore, automation data may be pre-processed in order to convert the data to a desired physical unit. Still further, automation data generated by one or more automation instruments may be representative of a time series. That is to say, the automation data may represent the development of the readings of an automation instrument over time. Collection and distribution of the automation data within the process plant may be performed by one or more (software) agents, cf. international patent publication WO 2016184763 A1. Hence, it should be understood that an automation instrument may be a combination of hardware and software or only one of both and may generate automation data.

For example from European patent application EP 18157412.0 it has become known that with the advent of cloud computing technology, a large number of automation instruments may be connected to a cloud computing system via communication means such as the Internet. The automation instruments may be located in a remote facility, such as the above mentioned process plant, and may be connected to the cloud computing system. For example, the automation instruments can be equipments, such as sensors, actuators, robots, machinery in an industrial set-up(s). The automation instruments can be medical devices and equipments in a healthcare unit. The automation instruments can be home appliances or office appliances in a residential/commercial establishment.

The cloud computing system may enable remote configuring, monitoring, controlling, and maintaining connected automation instruments. Also, the cloud computing system may facilitate storing large amounts of automation data periodically gathered from the automation instruments, analyzing the large amounts of automation data, and providing insights (e.g., Key Performance Indicators, Outliers) and alerts to operators, field engineers or owners of the automation instruments via a graphical user interface (e.g., of web applications). The insights and alerts may enable controlling and maintaining the automation instruments, leading to efficient and fail-safe operation of the automation instruments. The cloud computing system may also enable modifying parameters associated with the automation instruments and issues control commands via the graphical user interface based on the insights and alerts.

The cloud computing system may comprise a plurality of servers or processors (also known as 'cloud infrastructure'), which may or may not be geographical distributed, connected with each other via a network. A dedicated platform (hereinafter referred to as 'cloud platform') is installed on the servers/processors for providing above functionality as a service (hereinafter referred to as 'cloud service'). The cloud platform may comprise a plurality of automation (software) components executed on one or more servers or processors of the cloud computing system to enable delivery of the requested service to the automation instruments and/or its users.

One or more application programming interfaces (APIs) are deployed in the cloud computing system to deliver various cloud services to the automation instruments and/or its users. Currently, to avail a particular cloud service, a user needs to interact with one or more associated APIs. For example, the APIs may enable a user to access time series data of assets stored in a time series database, wherein the assets represent one or more automation instruments in the cloud platform. However, working with the application programming interfaces to access the time series data may not be a straight forward activity and may require skilled personnel. This may restrict the number of users using the cloud computing system. Also, this may limit the ability of the user to work with different APIs for accessing time series data.

In addition, a user may desire to have the latest or up-to-date data available for processing by the one or more automation (software) components, such as one or more automation data processing components as processing not up-to-date-data may impair the proper functioning of the automation instruments or the process as a whole. Due to the different transmission rates of automation data from the automation instruments to the cloud computing system/platform and/or due to different access mechanism, e.g., comprising different data transfer rates, within the cloud computing system/platform said automation data processing components may not possess the latest data and thus not process up-to-date data.

From US patent application US2018081962 is has become known that various data sets may be exchanged between various tools that are used, which may eliminate data redundancy, but may also cause shared data to get out of sync.

Hence, it is an object of the present invention to mitigate the identified problems.

According to a first aspect, the object is achieved by a method, in the field of automation technology, of updating processing data of an automation data processing component. The method comprising: Selecting, by an automation data extraction component, automation data of one or more automation instruments. The method further comprising: Creating, by the automation data extraction component based on automation data selected, processing data for processing by the automation data processing component. The method further comprising: Updating, by the automation data extraction component based on an update mechanism determined, at least parts of the processing data.

According to a second aspect, the object is achieved by a computer program comprising program code that when executed performs any one of the method steps of the first aspect.

According to a third aspect, the object is achieved by a computer program product comprising a (non-transitory) computer readable storage medium having program code embodied therein, the program code readable/executable by a processor to perform the method of the first aspect.

According to a third aspect, the object is achieved by a data stream which is representative of the computer program of the second aspect.

According to a fourth aspect, the object is achieved by an apparatus comprising a processor and memory, the apparatus operative to perform any one of the method steps of the first aspect.

The present invention is not limited to the above features and advantages. Indeed, those skilled in the art will recognize additional features and advantages upon reading the following detailed description, and upon viewing the accompanying drawings.
- Figure 1: shows a schematic representation of automation instruments that are connected to a cloud-platform.
- Figure 2: shows a schematic representation of an automation instrument and a corresponding automation model.
- Figure 3: shows an exemplary representation of a first data set and a second data set.
- Figure 4: shows an exemplary representation of properties of the first data set.
- Figure 5: shows an exemplary representation of selecting an update mechanism from a plurality of update mechanisms.
- Figure 6: shows an exemplary representation of properties of a first update mechanism.
- Figure 7: shows an exemplary representation of properties of a second update mechanism.
- Figure 8: shows an exemplary architecture for implementing a proposed embodiment.
- Figure 9: shows a first embodiment comprising exemplary method steps.
- Figure 10: shows a second embodiment comprising exemplary method steps.
- Figure 11: shows a third embodiment comprising exemplary method steps.
- Figure 12: shows a fourth embodiment comprising exemplary method steps.
- Figure 13: shows a fifth embodiment comprising exemplary method steps.
- Figure 14: shows a sixth embodiment comprising exemplary method steps.
- Figure 15: shows a seventh embodiment comprising exemplary method steps.
- Figure 16: shows an eighth embodiment comprising an exemplary method step.
- Figure 17: shows a ninth embodiment comprising exemplary method steps.
- Figure 18: shows a tenth embodiment comprising exemplary method steps.

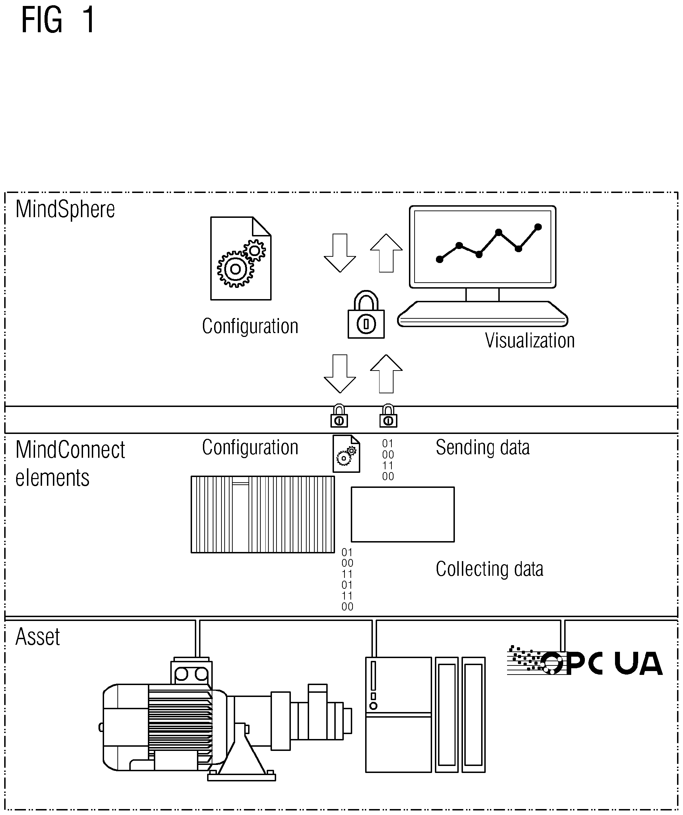

MindSphere, a cloud platform CP, offers the means to monitor automation instrument status as well as support maintenance and services. This requires automation data, as well as the components to collect and transfer said automation data. Automation data and the transmission and/or reception of automation data is depicted as arrows in Figure 1. Furthermore, intelligent automation (software) components that offer the monitoring and support functions are required. As depicted in Figure 1 an automation (software) component may for example serve for visualizing automation data. The automation (software) components such as one or more automation data processing components may be executed within MindSphere. MindConnect Elements provide the hardware and/or software for collecting automation data from one or more automation instruments, i.e. physical assets PA, and transferring the automation data collected to MindSphere. MindSphere and MindConnect Nano/IoT2040 allow creation and/or management of users; creation, management and changing of assets in MindSphere; onboarding of MindConnect Nano/IoT2040 to MindSphere in order to collect automation data from physical assets and transfer the automation data to MindSphere. Furthermore, a cloud platform CP such as MindSphere may serve for collecting data from data sources, e.g., using S7 or OPC UA protocols, via MindConnect Nano/IoT2040; visualizing the uploaded automation data. The cloud platform may thus serve for displaying of time series; displaying data points and open requests of a physical asset; managing the connected physical assets and automate rules. Thus, automation data collection from the one or more automation instruments in MindSphere is enabled.

A (virtual) asset may be understood as a digital representation of a physical asset, that is a machine or a (complete) automation system with one or multiple automation instruments (e.g. PLCs, field devices etc.), which may or may not be connected to a cloud system or a cloud platform, such as MindSphere. Automation data collection and data provisioning in the cloud platform may thus be based on so called (virtual) assets. The physical asset can be anything like a pump, motor, PLC, an entire tool machine, a production line, a robot, a crane, a car, a windmill and so on. The automation data of a physical asset is collected and sent to the cloud system or cloud platform to make that automation data available for further processing and analytics. An asset Identifier may be a serial number assigned by the manufacturer to a physical asset. It should be understood that the term automation instrument covers both, physical asset as well as the virtual asset. After the onboarding Process, MindConnect Nano is connected to this automation instrument. The asset identifier identifies the asset to which the data belongs.

Aspects may be understood as data modeling mechanisms for assets. For example: An asset may have an aspect that contains the data points: e.g., "power", "current", "voltage" etc. To a respective aspect one or more data point(s) is/are attached, wherein the number of data points is limited. Different transmission rates for transmitting automation data to the cloud platform may be used, e.g. up to 250 data points per 1 second (max 80 000 values/hour) for MindConnect Nano and up to 15 data points per 1 second (max. 2880 values/hour) may be used for MindConnect IoT 2040.

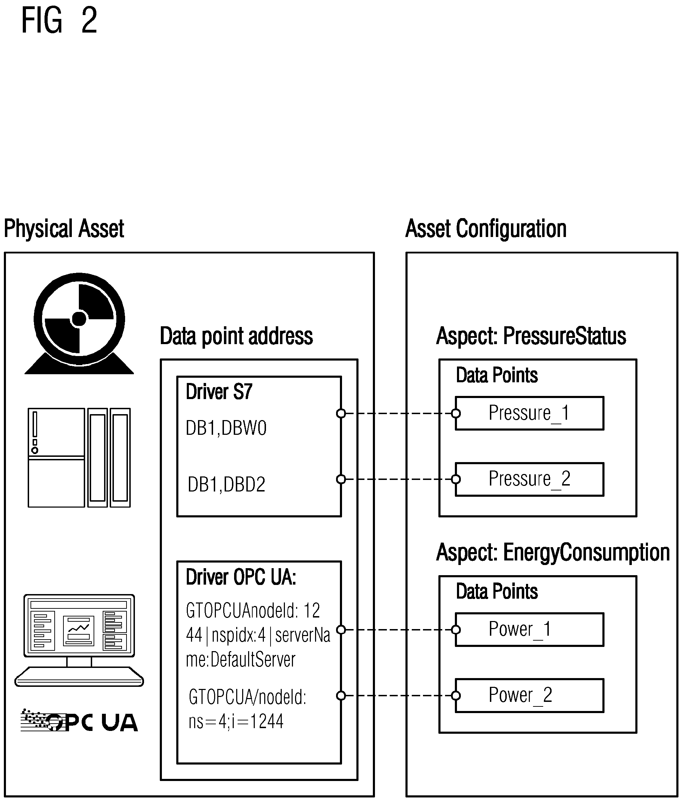

Asset creation and configuration is depicted in Figure 2. Figure 2 provides information on the relationship between aspects, representing data sources with automation data from the physical asset, i.e. automation instruments, and their configuration in MindSphere. Figure 2 shows the data points "Pressure_1", "Pressure _2" as well as "Power_1", "Power_2" which are linked to their aspects (PressureStatus or EnergyConsumption, respectively) and have their references to data sources (using e.g., OPC UA and/or S7 protocols). To configure aspects an automation component, i.e. "IoT Data Modeler", may be used. Thus, within MindSphere an asset, e.g. "Pump", may be selected and an aspect of that asset may be added. An aspect configuration may comprise a default name, e.g., "MindSphere Units: 1", which is the default value for an unconfigured asset (with no data points).

Aspects may be created by mapping one or more variables (from one or more assets) to datapoints. Thus datapoints may be available via MindConnect Nano/ IoT2040, i.e. an edge device, or in another automation instrument. Aspect types and aspects may thus be considered as a logical grouping of datapoints that are transmitted to MindSphere in the same cycle. For example, in MindSphere a user may create an asset. The asset may comprise one or more of the following: asset name, asset identification, asset type, a description and a location. An asset may thus be understood as a grouping of a limited number of aspects. The aspects in turn comprise one or more data points. The data points represent variables of one or more automation instrument. As a consequence the asset or the asset configuration as shown in Figure 2 may be present in a MindConnect Nano/ IoT2040, i.e. an edge device, or in another automation instrument. The asset may, as well, be used, in the could platform in order to model the automation instrument.

The automation data to be collected from an physical asset may be configured by configuring the asset aspects and the data points collected by MindConnect Nano/IoT2040. Aspects may thus be understood as data modeling mechanisms for assets. An asset type may for example correspond to a kind of product line made by a specific manufacturer. For example: SINAMICS, SIMATIC, SIMOTION, SINUMERIK etc. are asset types of SIEMENS products.

Data points correspond to variables, which variable values can be obtained from data sources (e.g. via OPC UA or S7 etc.). They are combined into a relevant aspect. For example, "temperature" and "torque" are data points of an aspect "PowerManagement". Data points may be configured in an automation component, e.g., MindSphere's "IoT Data Modeler".

An event may be understood as a change of a data point state, e.g., its quality code. Events may be used to trigger one or more requests. With a rule it is possible to define a request, which will be created in a cloud platform when an event is detected. Besides the monitoring rule, a description of event (e.g. "The limit is exceeded, this may indicate damage in the pump"), the resulting action (e.g. "Please contact your hotline") and priority (urgent, important or info) can be lodged.

With rules an automatic monitoring of data points of automation data for events may be configured. For example, a request will be created automatically, if a value exceeds or falls below a threshold. Thus a (further) automation data processing application that triggers an update of processing data, as will be described in the following, may be created that makes use of one or more rules.

Time Series is a sequence of measurements, which are produced by data sources over time. Analysis and visualization components can retrieve collected time series and present it to the user after processing, cf. Figure 1. The measurements, that have to be collected, can be specified in an automation model.

A reading cycle affects the speed of automation data collection. By default, the automation data is collected with a sampling rate of 5 seconds. It should be understood that the physical unit and other properties of the data point may be configured as well.

It should be understood that MindSphere and MindConnect Nano/ IoT2040, as mentioned throughout the present disclosure, are just exemplary embodiments and that instead of MindSphere any other cloud platform or cloud system may be used. The same is true for MindConnect Nano/ IoT2040 for which any other (edge) device for collecting automation data may be used. Additional assets and/or aspects may be configured in accordance with the mechanism disclosed in the above. MindConnect Nano/IoT2040 may receive a configuration from MindSphere via an internet connection and may subsequently start the data acquisition, cf. Figure 1. Within MindSphere certain automation components may allow visualization or other kind of processing, e.g., of the time series of a configured asset.

Thus, users are enabled to transfer their physical assets into a data model, representing the object in the digital world. This digital representation is also often referred to as the *digital twin* of a physical object. A digital twin may comprise static properties such as name, weight, height, length or color and may also represent the dynamics the asset is capable of. Thus a digital twin may comprise one or more assets and may in addition comprise a description of the specific use case one or more physical assets are used in.

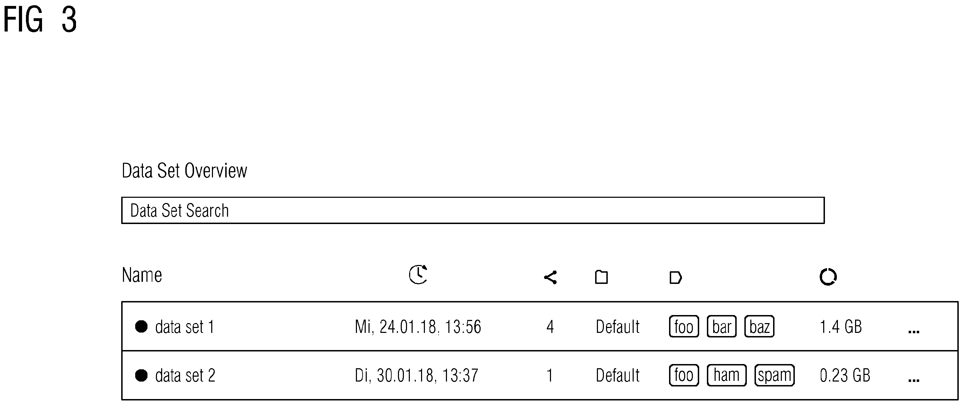

Now turning to Figure 3, storage of high resolution automation data and retrieval of automation data for analysis of said automation data may be desired. The automation data may be timestamped, e.g. with millisecond resolution. But also higher resolution, e.g., microsecond and possibly nanosecond resolution, may be provided for. The automation data may or may not be continuously written to or read from a central repository within a cloud platform, e.g. because the automation data is just being used for testing and simulation as a digital twin. Thus, the automation data of one or more aspects of one or more assets is stored in a central repository, e.g. a partition in a database, such as DynamoDB, of a cloud system or cloud platform. Said central repository may have a limited number of 1000 read and/or write accesses per second. So even if there was only one automation component with one aspect reporting automation data every millisecond, problems accessing the central repository may occur. This problem may occur also when automation data is not continuously received at that rate from one or more automation components, since the full capacity of the central repository for writing data will be used and it will stop other tasks from being able to write data for other aspects or other assets. This is exemplified by the following example: 50 microsecond data corresponds to 20,000 records per second, or 200,000 records for 10 seconds. That will take 3.3 minutes to write, and 3.3 minutes to read if there is no other activity on that partition.

Furthermore, certain automation components may not be able to access the central repository directly, e.g. due to the incompatibilities of data format and/or protocols employed. Thus, if automation components do not have built-in adapters for the data, a connection to the central repository may not be established. This applies in particular to the synchronization of automation data in a central repository.

As shown in Figure 3 automation data, e.g. in the form of a first data set, "data set 1", and/or a second data set, "data set 2", may be selected by an automation data extraction component. The graphical user interface of such an automation data extraction component is shown in Figure 3. The automation data may comprise a quality code, i.e. a health index, that indicates a condition of the data and/or the automation instrument. Besides that the data may comprise, as indicated earlier, a timestamp. The quality code may represent a unified error value. One or more agents use the "native" error codes of their specific protocol as health value. A backend automation component within the could platform may then provide a translation between the protocol specific error values and the one or more values of the quality code. Thus the mapping of the protocol specific error values may be performed using "translation tables" that translate the errors reported by the agent to respective messages or values in the cloud platform. This may for example comprise mapping OPC UA error codes as returned by an OPC client to S7 error codes or vice versa. The quality code may reflect the health status along the chain comprising one or more of the following: a link between an edge device and an automation instrument, a link between the cloud platform and the edge device and/or a link between parser and IoT model. The parser may be an automation component (executed in the cloud platform) that is operative to receive a certain type of automation data sent by one or more agents. An aggregated status of the automation data is depicted by the filled circles in Figure 3 which may take different colors dependent on the aggregated status indicating a certain health index of the respective data set. Further properties; such as data set size, date of creation of the data set and tag-words describing the respective data set may be presented.

The automation data extraction component may serve for creating processing data for processing by the automation data processing component. The automation data extraction component may thus access the central repository in which automation data is stored. As a result of accessing the automation data in the central repository processing data may be created, e.g. in the form of a file comprising the processing data. Now, in order to create a data set one or more assets and/or one or more aspects of that asset may be selected. The automation data in the central repository belonging to the one or more assets and/or aspects selected may thus be identified as a data set.

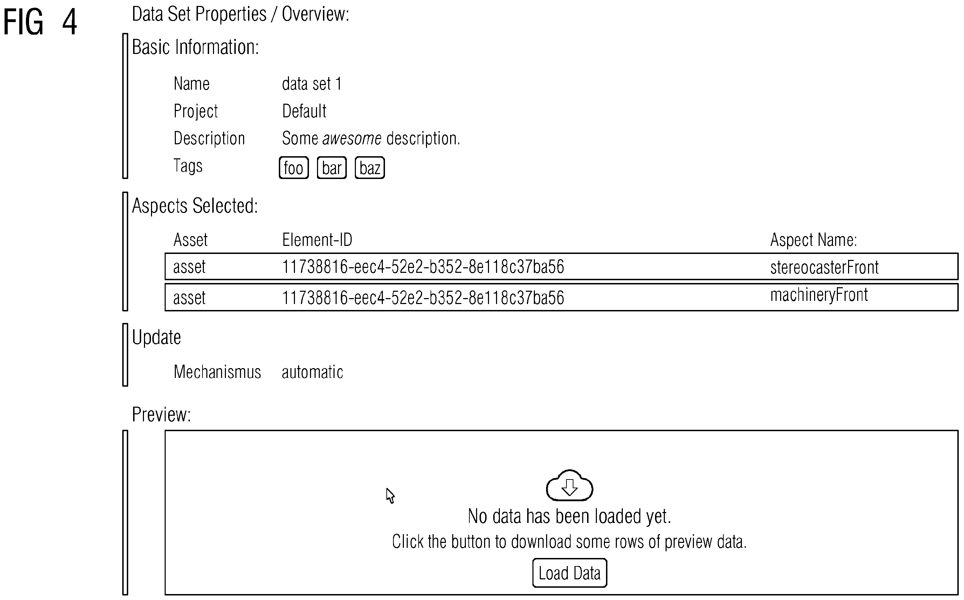

Now turning to Figure 4, further details of the automation data extraction component are depicted. The automation data, denoted "data set 1" in Figure 4, may comprise a description and/or other metadata of one or more assets. As shown in Figure 4, the data set 1 comprises one asset only. The Element-ID of the asset is also shown in Figure 4. Two aspects, i.e. "stereocasterFront" and "machineryFront", of the asset are comprised in the "data set 1"selected.

The automation data extraction component further comprises a preview function for previewing the automation data selected. In addition, an update mechanism for updating the processing data is set in to automatic mode. That is to say, the update mechanism for updating the processing data creates the processing data based on the automation data selected.

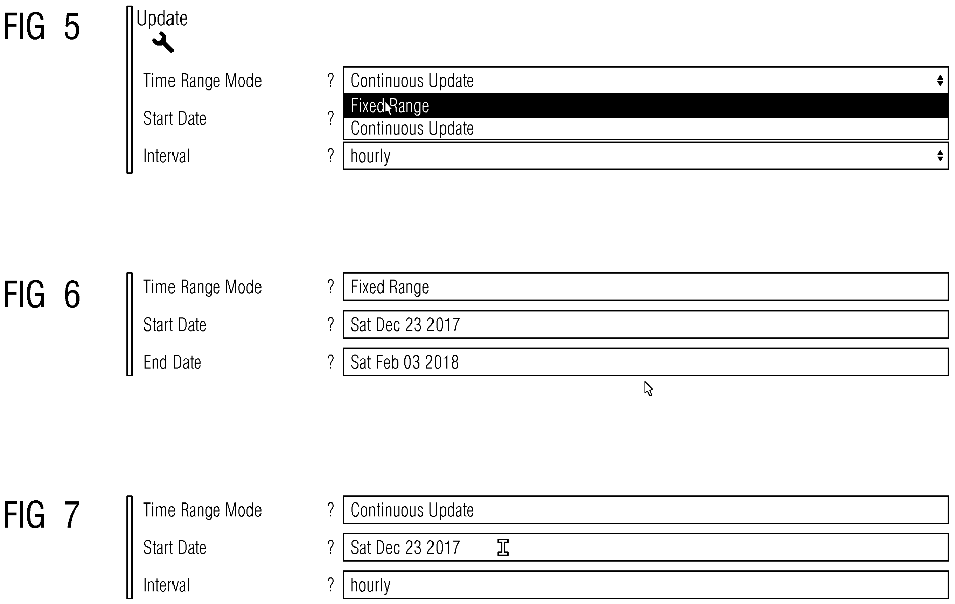

In Figure 5 determining of an update mechanism is shown in more detail. An update mechanism may be determined from a plurality of update mechanism available. The update mechanism may either be determined by a user selecting one of the update mechanisms available or may be performed automatically based on a predetermined criterion, e.g. the automation data comprising data of one or more automation instrument types and/or data one or more of assets, asset types and/or aspects. As shown in the embodiment of Figure 5 the update mechanisms available may be set to a fixed time range mode or a continuous update mode.

In the case of a fixed time range, as shown in Figure 6, a start date and an end date may be determined. Thereby, data possessing a time stamp indicative of a time between the start date and the end date is selected by the automation data extraction component from the automation data selected. Subsequently processing data may be created comprising automation data of that time span. The processing data may be created in order to be processed by an automation data processing component. To this end, the processing data may comprise the automation data selected in a formatted optimized to be processed by the automation data processing application.

In case of a continuous update, as shown in Figure 7, an update of the processing data, i.e. the automation data selected, may be performed according to regular intervals, e.g., hourly, daily and/or weekly, preferably beginning from a set start date on.

Furthermore, an event-based update mechanism for updating the processing data may be determined. That is to say, an event, for example an (aggregated) quality code, may trigger the update of the automation data selected. Hence if a quality code changes or exceeds a certain threshold, e.g., a number of individual quality codes of the data set values, an update is triggered.

Still further, an update may be performed according to a certain update mechanism determined, but does not update all of the processing data, i.e. automation data selected. In such a case only the automation data that has changed since the last update and/or having a quality code below a certain predetermined threshold, e.g., quality code status is low, will be updated. It is to be understood these update mechanism may be combined, i.e. the continuous update mechanism, the event-based mechanism and the selective-update mechanism may be combined.

In addition, an update may be performed if a certain amount of new automation data is received and/or stored in the central repository. Thus, if the amount of that received and/or stored since the last update exceeds a certain threshold (amount of data) an update is triggered. Thus, an update is not only performed when the automation data selected is completely updated in the central repository but rather before that point in time.

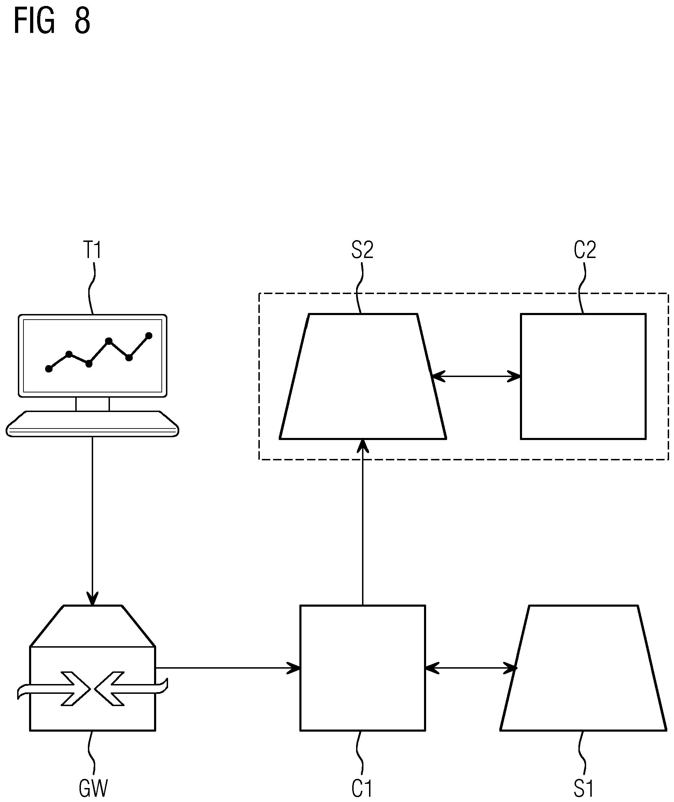

In Figure 8 an architecture of the proposed cloud platform is shown. The cloud platform may be accessed by a user via browser T1 and a gateway GW. The user may thus configure the automation data extraction component C1. Automation data may be stored in a central repository S1. Automation data from one or more automation instruments is received in said central repository, preferably a database. As described earlier, the automation data stems from one or more automation components and is collected by one or more agents. Upon reception in the cloud platform the automation data may be parsed and stored in the central repository in accordance with an automaton model. The automation model comprising, for example, one or more assets and/or one or more aspects. Also, in accordance with the present disclosure, one or more (further) automation data processing components may operate directly on the central repository, that is to say reading data directly from and/or writing data directly on the storage of the central repository. However, as described earlier, such operation may be limited due to the access speed limitation, e.g., of one or more partitions of the central repository, and/or format incompatibilities, effectively slowing down operation.

From said central repository S1 automation data is copied to auxiliary repository S2, thereby updating the data previously stored in auxiliary repository S2. In addition to copying the automation data from the central repository to the auxiliary repository S2 the automation data extraction component may convert the automation data of the central automation data repository into an auxiliary format for storing the automation data in the auxiliary automation data repository. For example, the automation data in the central repository may be in a first format, for example JSON (JavaScriptObjectNotation), and the automation data in the auxiliary repository may be in a second format, for example TDE (TableauDataExtract). Preferably the auxiliary repository comprises or consists of an in-memory database. The in-memory database primarily relies on main memory for storing the automation data in form of processing data.

Now, automation data processing component C2 may access said auxiliary repository S2. In addition, other automation data processing components, not shown, may retrieve the automation data from the auxiliary repository.

An automation data processing component, e.g., Tableau Server, may be installed on one or more processors and memory, such as several Amazon EC2 instances. After processing the processing data in the auxiliary repository the processed automation data may be discarded or written in the auxiliary repository and/or the central repository.

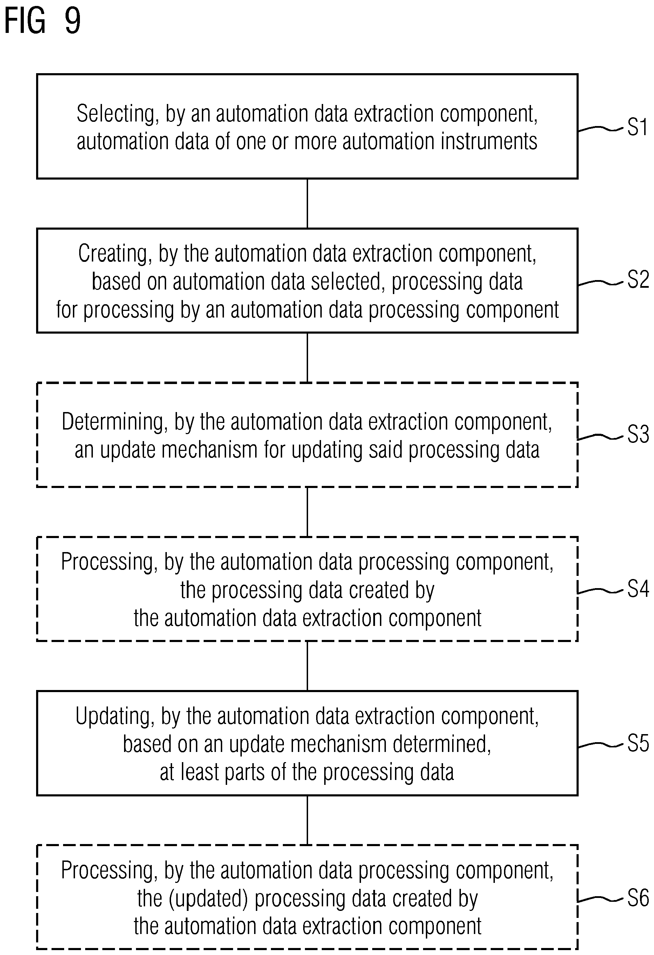

Further embodiments of the present invention are disclosed in connection with Figures 9 to 18.

As shown in Figure 9 in a first step S1 selecting, by an automation data extraction component, automation data of one or more automation instruments may be performed. The selection may be based on user input or on a automatic identification of relevant automation data. For example, one or more assets and/or one or more aspects may be found relevant for an analysis of the underlying process. Thus, said data may be identified within a central repository, such as a data lake. A data lake is a storage repository that holds a vast amount of raw data in its native format until it is needed. While a hierarchical data warehouse stores data in files or folders, a data lake uses a flat architecture to store data. Each data element in a lake is assigned a unique identifier and tagged with a set of extended metadata tags. When a business question arises, the data lake can be queried for relevant data, and that smaller set of data can then be analyzed to help answer the question.

In a second step S2 creating, by the automation data extraction component based on automation data selected, processing data for processing by an automation data processing component may be performed. The processing that may thus be in a format optimized for an automation data processing component to process the processing data. The processing data may comprise all of the information content of the automation data previously selected but may for example be split into separate files in order to be processed by the automation data processing component.

In a third step S3 determining, by the automation data processing component, an update mechanism for updating said processing data may be performed. Upon initially providing the processing data to the processing component an update of the processing data may be needed in order for the processing component to provide the latest and up-to date results. For example, if the status of a automation instrument and/or the automation data from said automation instrument changes this may have consequences for the subsequent analysis of the automation data, as the tasks in the plant in which the one or more automation instruments are installed depend on the proper analysis of the latest automation data. Hence, a plurality of updating mechanism may be provided in the cloud platform for updating the processing data. The updating mechanism may thus be chosen according to the needs of the specific process in an industrial plant.

In a fourth step S4 processing, by the automation data processing component, the processing data created by the automation data extraction component may be performed. For example, the automation data processing component may be informed about an update of the processing data. The subsequent processing of the updated processing data may be performed automatically by the automation data processing application which upon reception of a corresponding trigger re-loads the processing data from the auxiliary repository or alternatively a user may be prompted an with an indication that updated processing data is available and load said updated processing data manually. As explained in the above, the result of processing the processing data may be displayed to a user or may be transmitted to another automation data processing application for still further processing. Furthermore the result of the processing of the processing data may be stored in the auxiliary repository and/or the central repository.

In a fifth step S5 updating, by the automation data extraction component based on an update mechanism determined, at least parts of the processing data. As may be the case, all of the processing data may be updated or only the part of the processing data that needs to be updated due to a change in the underlying automation data may be updated. For example, automation data that has changed due to newly written automation data in the central repository is identified and if a pre-defined criterion is met an update of the processing data is triggered. The criterion may correspond to a quality code of the automation data, an age of the automation data or an amount of the automation data in the central repository.

In a sixth set S6 processing, by the automation data processing component, the (updated) processing data created by the automation data extraction component may be performed. In accordance with the above the processing component may process all or only part of the updated processing data. For example, the processing component may in case several files of processing data are created only process the files comprising the updated processing data.

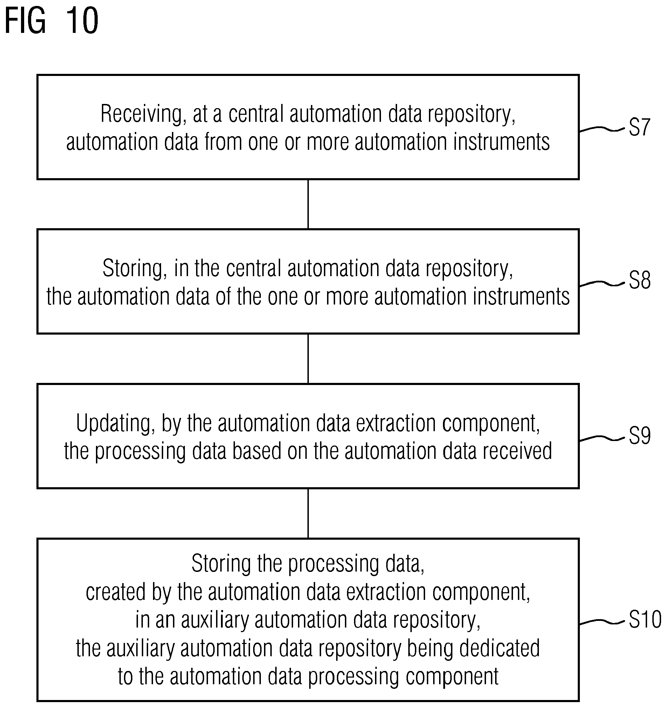

Now turning to Figure 10, in a step S7 receiving, at a central automation data repository, automation data from one or more automation instruments may be performed. Step S7 thus serves to transmit the automation data from the field, e.g., via an edge device or another automation instrument, to the cloud platform which may host the central repository. Reception by the cloud platform and/or transmission to the cloud platform may occur at a certain reception and/or transmission rate. As mentioned earlier the automation data received may be subject to a parser which identifies and assign the automation data according to the automation model to a certain asset and/or aspect.

In a step S8 storing, in the central automation data repository, the automation data of the one or more automation instruments may be performed. As will be understood in connection with the above disclosure, storing may comprise writing one or more values of the automation data in the central repository. Such writing may occur at a certain rate, i.e. a certain number of write accesses may be performed, e.g., dependent on the partition capabilities of the central repository.

The stored data may be analyzed by a (further) automation data processing component, comprising for example one or more previously introduced rules, that identifies updated automation data in the central repository. For example automation data being older or younger than a pre-determined point in time may signify that an update of the processing data should be performed. Said (further) automation data processing component may also analyze the automation data in the central repository and/or the automation data received according to another pre-determined criterion that implies that an updated of the processing data should be performed.

Hence, in a step S9 updating, by the automation data extraction component, the processing data based on the automation data received may be performed. Step S9 ma be triggered, either because a certain period of time elapsed, e.g., in the case of the continuous update mechanism is selected, or because and event has been triggered, e.g. because a pre-determined criterion has been met.

In a step S10 storing the processing data, created by the automation data extraction component, in an auxiliary automation data repository, the auxiliary automation data repository being dedicated to the automation data processing component may be performed. Again storing may comprise writing data on the auxiliary repository, e.g., at a certain rate. Automation data extraction component and automation data processing component may be configured to access the auxiliary repository. In addition, automation data extraction component may also access the central repository whereas the automation data processing component may only access the auxiliary repository thereby effectively providing a safeguard for unwanted access of the automation data processing component on the central repository.

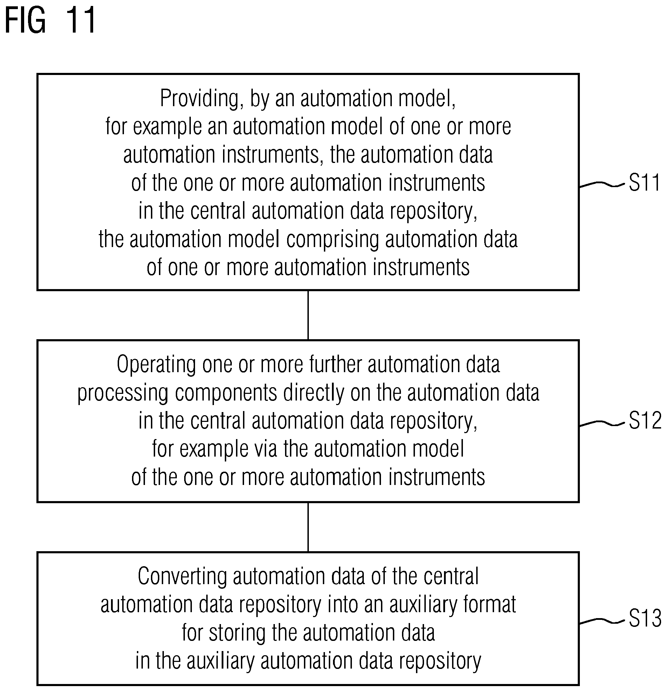

Now turning to Figure 11, in a step S11 providing, by an automation model, for example an automation model of one or more automation instruments, the automation data of the one or more automation instruments in the central automation data repository, the automation model comprising automation data of one or more automation instruments may be performed. The automation model may comprise one or more assets and/or aspects. Hence, by selecting one or more assets and/or aspects automation data relating to that asset and/or aspect may be available.

In a step S12 operating one or more further automation data processing components directly on the automation data in the central automation data repository, for example via the automation model of the one or more automation instruments may be performed. Such (further) automation data processing components may be server for analyzing the automation data in the central repository with respect to changes and/or updates of the automation data. There may be an interface between the (further) automation data processing component and the automation data extraction component. An indication triggering an update of the processing data may be sent from the (further) automation data processing component to the automation data extraction component.

In a step S13 converting automation data of the central automation data repository into an auxiliary format for storing the automation data in the auxiliary automation data repository may be performed. The automation data extraction component may read the data from the central repository and modify the format of the automation data read from the central repository, i.e. convert the format.

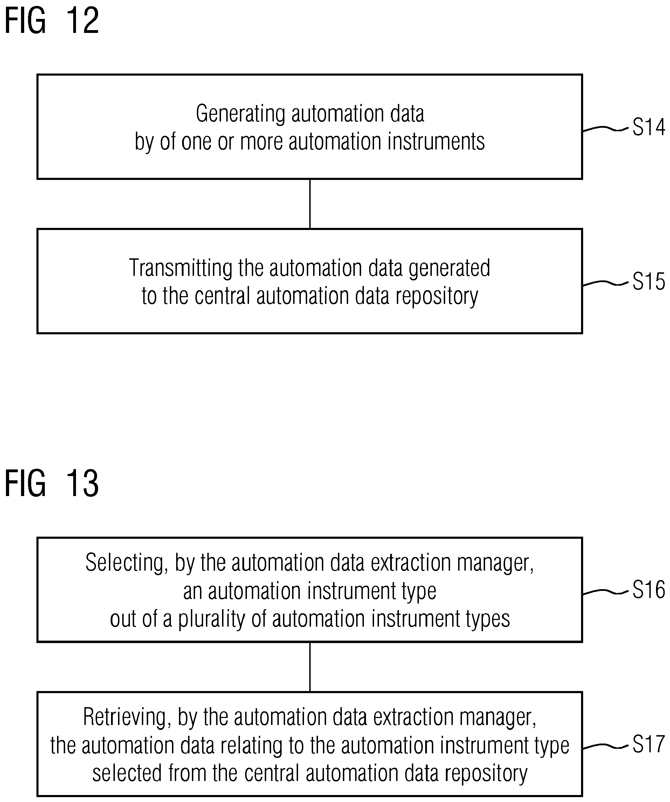

Now turning to Figure 12, a step S14 generating automation data by one or more automation instruments may be performed. Said one or more automation instruments may generate said data at a certain rate, e.g. sample a sensor signal at a certain rate. The one or more automation instruments may also transmit the automation data generated at a certain rate, e.g. via a field bus to a control unit such as a PLC (Programmable Logic Controller) or to another edge device that is communicative connection with a cloud platform.

In a step S15 transmitting the automation data generated to the central automation data repository may be performed. Picking up the example of the preceding paragraph, the edge device itself may transmit the automation data received from the automation instrument to the cloud platform, e.g. at a certain rate, for example bits per second, preferably via an internet connection. Of course automation data may be transmitted from the automation instrument directly to central repository (in the cloud platform), e.g. via a built-in interface.

Now turning to Figure 13, in a step D16 selecting, by the automation data extraction manager, an automation instrument type out of a plurality of automation instrument types may be performed. This may be via user input, i.e. a user selecting an automation instrument type or the automation data extraction component selects an automation instrument type from a list. Furthermore, a (further) automation data processing component may transmit an indication indicating a automation instrument type to the automation data extraction component which subsequently selects automation data belonging to said automation instrument type from the central repository.

Hence, in a step S17 retrieving, by the automation data extraction manager, the automation data relating to the automation instrument type selected from the central automation data repository may be performed. Thereby, one or more automation instrument types may be identified whose data is of special value or of significance. In particular, if the processing data comprises automation data of an automation instrument type and it is determined (for example by a (further) automation data processing component) that said automation instrument type is outdated or no longer supported, the processing data may require an update. This applies in particular when the automation data processing component has been shut down and started again after a certain period of time, since the processing data relied upon may be outdated at the point in time the automation data processing component is started again.

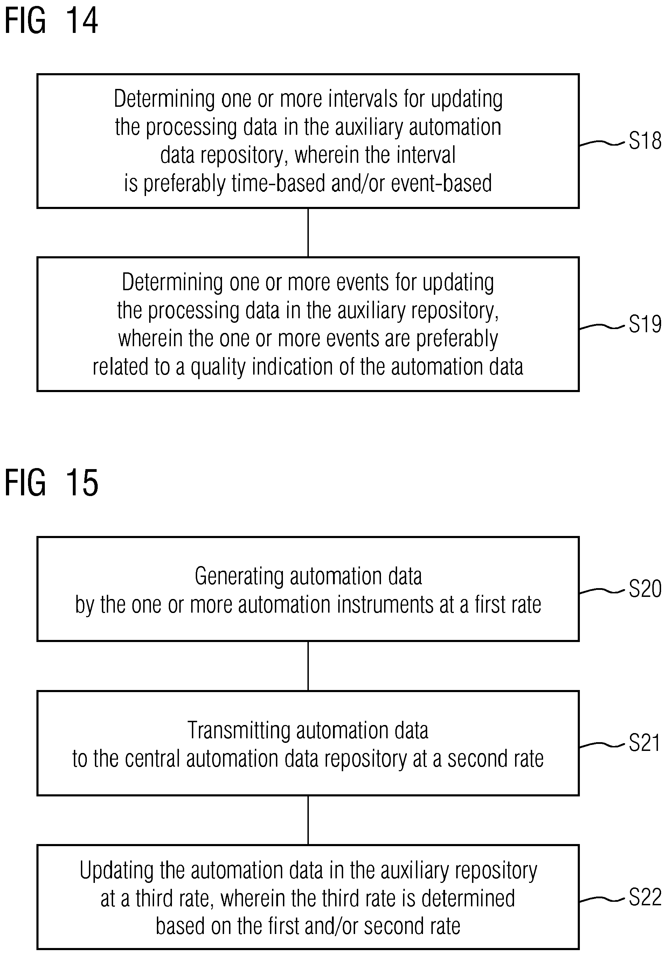

Now turning to Figure 14, in a step S18 determining one or more intervals for updating the processing data in the auxiliary automation data repository, wherein the interval is preferably time-based and/or event-based may be performed. The interval according to which an update of the processing data or part of the processing data may be performed (in an event-based manner) may correspond to one or more of the criteria mentioned in the above, i.e. amount of updated automation data, changed quality code or pre-determined amount of data points having a certain quality code etc. Furthermore, the interval according to which an update of the processing data or part of the processing data may be performed (in a time-based manner) may be determined, for example in accordance with the specific process in a plant, e.g., in which every 4 hours a new batch is executed and thus new data available. The interval according to which an update of the processing data or part of the processing data may be performed (in a time-based manner) may also be determined in accordance with the rules of the automation data transmission from the automation instrument. For example, an automation instrument, such as an edge device, may be configured to send collected automation data only every 4 hours, e.g., in order to coordinate with other edge devices that transmit their automation data in a time-shifted manner. Of course one or more time-based and one or more event-based update mechanism may be combined.

In a step S19 determining one or more events for updating the processing data in the auxiliary repository, wherein the one or more events are preferably related to a quality indication of the automation data, may be performed. In case of an event-based update mechanism, one or more events triggering an update of the processing data may be determined, for example by a (further) automation data processing component (preferably operating on the central repository).

Now turning to Figure 15, in a step S20 generating automation data by the one or more automation instruments at a first rate may be performed. As mentioned in the above this may refer to sampling and/or transmitting data by the one or more automation instruments. In a step S21 transmitting automation data to the central automation data repository at a second rate may be performed. Said transmission may take place from the automation instrument, such as an edge device, to a cloud gateway, e.g. the gateway GW of Figure 8 - although in addition to the gateway of Figure 8 a separate gateway for accessing the cloud platform may exist, wherein in particular the first gateway may serve for user access and the second gateway may provide connectivity to the one or more automation instruments.

In a step S22 updating the automation data in the auxiliary repository at a third rate, wherein the third rate is determined based on the first and/or second rate may be performed. The third rate may correspond to a data transfer rate of transferring data from one disk or partition of the central repository to a disk or partition of the auxiliary repository.

As should be understood, the steps as outlined in the Figures 9 to 17 may be performed in the order given or may be performed in another order. Furthermore certain steps may be discarded, e.g. steps S3, S4 and S6, while still achieving the desired objective. As the case may be one or more of the steps described may be performed either in parallel, i.e. essentially simultaneously, or in a subsequent manner.

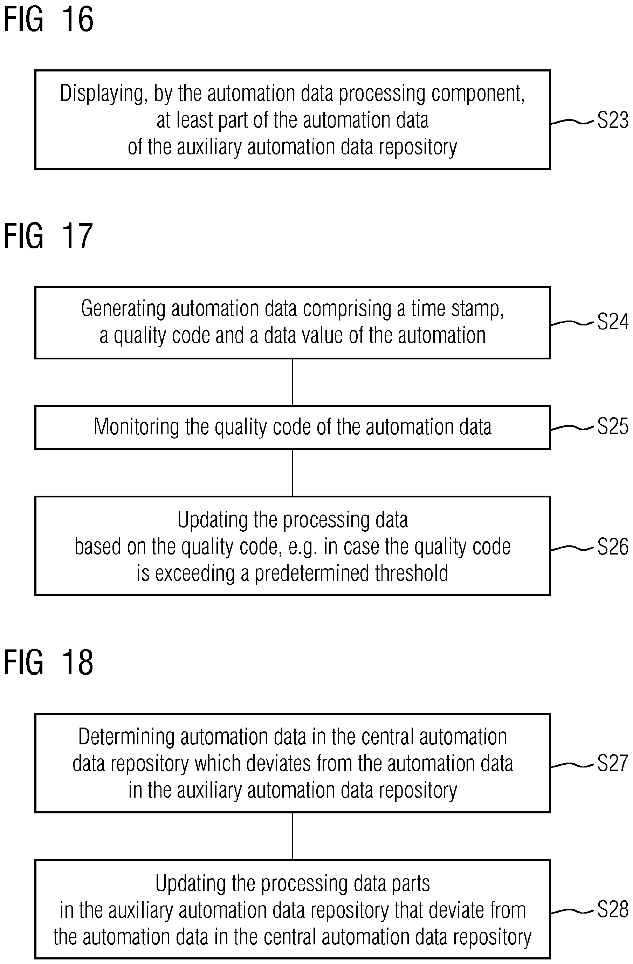

Now turning to Figure 16, a step S23 of displaying, by the automation data processing component, at least part of the automation data of the auxiliary automation data repository may be performed. Although other automation data processing component may exist that analyze the processing data provided, visual analysis program such as TABLEAU, may exist that may provide tools for visualizing but also for analyzing the processing data, e.g. perform a linear regression on the processing data. Thus, there may be a graphical user interface via which the processing data itself or an analysis of the processing data is displayed and via which a user may interact.

Now turning to Figure 17, in a step S24 generating automation data comprising a time stamp, a quality code and a data value of the automation may be performed. In a step S25 monitoring the quality code of the automation data may be performed, for example by a (further) automation data processing component. In a step S26 updating the processing data based on the quality code, e.g. in case the quality code is exceeding a predetermined threshold, may be performed.

Now turning to Figure 18, in a step S27 determining automation data in the central automation data repository which deviates from the automation data in the auxiliary automation data repository may be performed. Change may be understood in a absolute way that any change is determined. Of course only certain properties of the automation data may be monitored and a change of one or more properties may only be regarded as such if it exceeds a certain threshold.

In a step S28 updating the processing data parts in the auxiliary automation data repository that deviate from the automation data in the central automation data repository may be performed. In other words, those parts of the processing data will be updated for which a change has been determined. Furthermore it is proposed to update also automation data that is within a certain (pre-defined) period of time before and/or after the data point for which a change has been determined and/or for which an update has been performed. This is because certain faults and errors in a process plant have a corresponding signature which can be identified in the automation data before and/or after the fault or error has occurred.

Many of the functions described in this specification have been labeled as components, or more particularly as automation data processing/extraction component, in order to more particularly emphasize their implementation independence. For example, a component may be implemented as a hardware circuit comprising custom VLSI circuits or gate arrays, off-the-shelf semiconductors such as logic chips, transistors, or other discrete components. A component may also be implemented in programmable hardware devices such as field programmable gate arrays, programmable array logic, programmable logic devices or the like. One or more components may also be implemented in software for execution by various types of processors. A component may comprise program code which in turn may, for instance, comprise one or more physical or logical blocks of computer instructions which may, for instance, be organized as an object, procedure, or function. Nevertheless, the executables of a component need not be physically located together, but may comprise disparate instructions stored in different locations which, when joined logically together, comprise the component and achieve the stated purpose for the component. Indeed, a component of program code may be a single instruction, or many instructions, and may even be distributed over several different code segments, among different programs, and across several memory devices. Similarly, automation data may be identified and illustrated herein within components, and may be embodied in any suitable form and organized within any suitable type of data structure. The automation data may be collected as a single data set, or may be distributed over different locations including over different storage devices, and may exist, at least partially, merely as electronic signals on a system or network. Where a component or portions of a component are implemented in software, the program code may be stored and/or propagated on in one or more computer readable medium(s).

A computer program product, in one embodiment, includes a computer readable storage medium that has program code embodied therein. The program code is readable/executable by a processor to perform one or more steps of the embodiments described in the above. The program code is readable/executable by a processor in order for the processor to perform any one of the method steps. The computer readable medium may be a tangible computer readable storage medium storing the program code. The computer readable storage medium may be, for example, but not limited to, an electronic, magnetic, optical, electromagnetic, infrared, holographic, micromechanical, or semiconductor system, apparatus, or device, or any suitable combination of the foregoing. More specific examples of the computer readable storage medium may include but are not limited to a portable computer diskette, a hard disk, a random access memory ("RAM"), a read-only memory ("ROM"), an erasable programmable read-only memory ("EPROM" or Flash memory), a portable compact disc read-only memory ("CD-ROM"), a digital versatile disc ("DVD"), an optical storage device, a magnetic storage device, a holographic storage medium, a micromechanical storage device, or any suitable combination of the foregoing. In the context of this document, a computer readable storage medium may be any tangible medium that can contain, and/or store program code for use by and/or in connection with an apparatus, or device.

The apparatus operative to perform any one of the function or method steps as described in the above may be embodied as a hardware appliance that can be installed or deployed on a server, or elsewhere on a data network, for example a cloud system or cloud platform. In certain embodiments, the apparatus may include a hardware device with or without a housing. The apparatus may thus include an embodiment of an automation data extraction component, automation data processing component, a central repository and/or an auxiliary repository. Of course the apparatus may comprise one or more additional components for performing any one of the functions or method steps as described in the above.

While the solution has been described with reference to specific exemplifying embodiments, the description is generally only intended to illustrate the inventive concept and should not be taken as limiting the scope of the solution.

## Claims

1. A method, in the field of automation technology, of updating processing data of an automation data processing component (C2), comprising and/or initiating:
Selecting (S1), by an automation data extraction component (C1), automation data of one or more automation instruments (ED, PA),
Creating (S2), by the automation data extraction component (C1) based on automation data selected, processing data for processing by the automation data processing component (C2), Updating (S5), by the automation data extraction component (C1) based on an update mechanism determined, at least parts of the processing data.

2. The method according to the preceding claim, further comprising:
Determining (S3), by the automation data processing component (C2), an update mechanism for updating said processing data.

3. The method according to any one of the preceding claims, further comprising:
Processing (S4), by the automation data processing component (C2), the processing data created by the automation data extraction component (C1).

4. The method according to any one of the preceding claims, further comprising:
Receiving (S7), at a central automation data repository (S2), automation data from one or more automation instruments, Updating (S9), by the automation data extraction component, the processing data based on the automation data received.

5. The method according to any one of the preceding claims, further comprising:
Storing (S8), in the central automation data repository, the automation data of the one or more automation instruments.

6. The method according to any one of the preceding claims, further comprising:
Storing (S10) the processing data, created by the automation data extraction component (C1), in an auxiliary automation data repository (S2), the auxiliary automation data repository (S2) being dedicated to the automation data processing component (C2).

7. The method according to any one of the preceding claims, further comprising:
Providing (S11), by an automation model, for example an automation model of one or more automation instruments (ED, PA), the automation data of the one or more automation instruments (ED, PA) in the central automation data repository (S1), the automation model comprising automation data of one or more automation instruments (ED, PA).

8. The method according to any one of the preceding claims, further comprising:
Operating (S12) one or more further automation data processing components directly on the automation data in the central automation data repository (S1), for example via the automation model of the one or more automation instruments (ED, PA).

9. The method according to any one of the preceding claims, further comprising:
Converting (S13) automation data of the central automation data repository (S1) into an auxiliary format for storing the automation data in the auxiliary automation data repository (S2) .

10. The method according to any one of the preceding claims, further comprising:
Generating (S14) automation data by one or more automation instruments (ED, PA), and
Transmitting (S15) the automation data generated to the central automation data repository (S1).

11. The method according to any one of the preceding claims, further comprising:
Selecting (S16), by the automation data extraction manager (C1), an automation instrument type out of a plurality of automation instrument types, and
Retrieving (S17), by the automation data extraction manager (C1), the automation data relating to the automation instrument type selected from the central automation data repository (S1).

12. The method according to any one of the preceding claims, further comprising:
Determining (S18) one or more intervals for updating the processing data in the auxiliary automation data repository, wherein the interval is preferably time-based and/or event-based.

13. The method according to any one of the preceding claims, further comprising:
Determining (S19) one or more events for updating the processing data in the auxiliary repository, wherein the one or more events are preferably related to a quality indication of the automation data.

14. The method according to any one of the preceding claims, further comprising:
Generating (S20) automation data by the one or more automation instruments at a first rate, and/or
Transmitting (S21) automation data to the central automation data repository at a second rate and/or
Updating (S22) the automation data in the auxiliary repository at a third rate, wherein the third rate is determined based on the first and/or second rate.

15. The method according to any one of the preceding claims, further comprising:
Displaying (S23), by the automation data processing component, at least part of the automation data of the auxiliary automation data repository.

16. The method according to any one of the preceding claims, further comprising:
Generating (S24) automation data comprising a time stamp, a quality code and a data value of the automation.

17. The method according to any one of the preceding claims, further comprising:
Monitoring (S25) the quality code of the automation data, and Updating (S26) the processing data based on the quality code, e.g. in case the quality code is exceeding a predetermined threshold.

18. The method according to any one of the preceding claims, further comprising:
Determining (S27) automation data in the central automation data repository which deviates from the automation data in the auxiliary automation data repository, and
Updating (S28) the processing data parts in the auxiliary automation data repository that deviate from the automation data in the central automation data repository.

19. A computer program (C1) comprising program code that when executed performs any one of the method steps of any one of the preceding claims.

20. A computer program product (comprising a computer readable storage medium having program code embodied therein, the program code readable/executable by a processor to perform the method of one of claims 1 to 18.

21. A data stream which is representative of the computer program of claim 19.

22. An apparatus (CP) comprising a processor and memory, the apparatus operative to perform any one of the method steps of the claims 1 to 18.
